# EUROPEAN PATENT APPLICATION

(11) **EP 1 675 286 A1**
(43) Date of publication of application: **28.06.2006**
(21) Application number: 04030450.3
(22) Date of filing: 22.12.2004
(51) Int. Cl.: H04B 15/04

(54) **Interference rejection in a receiver**

(71) Applicant: SIEMENS AKTIENGESELLSCHAFT, 80333 München (DE)
(72) Inventor: Braune, Jörg, 13507 Berlin (DE); Woyde, Bodo, 14547 Fichtenwalde (DE)

(57) **Abstract**

A device (10; 30), comprises
- a radio receiver (12) comprising means for receiving radio signal on a first frequency band (GSM 1800);
- at least one clock controlled circuit component (11) having at least one input (101); and
- between a charge accumulator (17) and the clock controlled circuit component (11) a first filter (15) having a reject band (RB1) overlapping with the first frequency band (GSM 1800).

## Description

### Field of the invention

The invention relates to circuit design, and in particular, to reduction of self-interference in a device comprising a radio receiver.

### Background of the invention

In mobile radio devices, such as in mobile telephones, highly sensitive radio receivers are used in the direct vicinity of clock controlled circuit component, such as microprocessors, microcontrollers, or Digital Signal Processors DSP. Because of the continuously increasing operating speed of the digital circuits, there is regularly some disturbing interference between the digital components and the radio receiver. The cause for this is the frequency spectra resulting from fast switching that due to the steep signal edges extend up to the gigahertz range.

So far these disturbing interferences have primarily been suppressed by using electromagnetic shielding in the form of metallic or metallized caps. The shielding effect is then achieved by hermetically closing the space where the source of interference is located with the cap. This kind of shielding is rather costly. Furthermore, long delays caused by manufacturing and delivery of the shielding slow down the building of prototypes and production models and therefore reduce the efficiency of the development process.

It would be advantageous if the shielding could be omitted. Nevertheless, by doing so, the risk of the input and output leads radiating excessively disturbing frequencies would be increased. This would have a negative impact on the functioning of the receiver.

### Description of the invention

The need of a shielding for a clock controlled circuit component may be reduced for a device according to claim 1.

The dependent claims describe various embodiments of the invention.

### Advantages of the invention

By placing a filter having a reject band between a charge accumulator and a clock controlled circuit component, the reject band overlapping with a first frequency band, radio signal on which a radio receiver comprised by the device is adapted to receive, the undesired appearing of frequency components that would disturb the receiver by interfering with the radio frequency band used can be prohibited or efficiently suppressed. Furthermore, the proposed solution will lead to no or to a reduced radiation to openly conductive leads or bus systems possibly comprised in the device.

If the radio receiver further comprises means for receiving radio signal on a second frequency band, and the device further comprises between a charge accumulator and the clock controlled circuit component a second filter having a reject band overlapping with the second frequency band, the same advantages as of the previous embodiment can be achieved for a device comprising a dual band receiver or a receiver capable of operating on more than two frequency bands, such as triple- or four band receiver.

If in a device according to the previous embodiment the reject band of the first filter is higher in frequency than the reject band of the second filter, and the first filter is placed closer to said charge accumulator than said second filter, the rejecting of disturbances on the higher frequency band can be improved since by rejecting the higher band after rejecting the lower band, more harmonics from the first band falling to the higher band may be rejected. This is especially the case where the middle frequency of the upper frequency band is about double the frequency of the lower frequency band.

If the reject band of the second filter extends to overlap with GSM 850 and 900 MHz frequency bands, or if the reject band of the first filter extends to overlap with GSM 1800 and 1900 MHz frequency bands, the commercially most interesting GSM frequency bands can be covered.

If the device further comprises a plurality of clock operated circuit components each comprising at least one input are arranged into a tree structure or a star structure in such a manner that the first filter or the first filter and the second filter are located between the charge accumulator and the tree structure or the star structure, the principle of the invention can be applied to a more complex system without excessively increasing the number of filters. Since constructing and implementing a filter tends to be costly and adds to the complexity of the device, it is better to have only as small number of filters as is necessary.

### List of Figures

In the following, the invention is disclosed in more detail with reference to the examples shown in the accompanying drawings in Figures 1 to 3, of which:
Figure 1 shows a device where the invention can be used;
Figure 2 illustrates the processing part of the device in more detail; and
Figure 3 illustrates a device comprising a plurality of clock controlled circuit components.

Same reference numerals refer to similar structural elements throughout the Figures.

### Detailed description

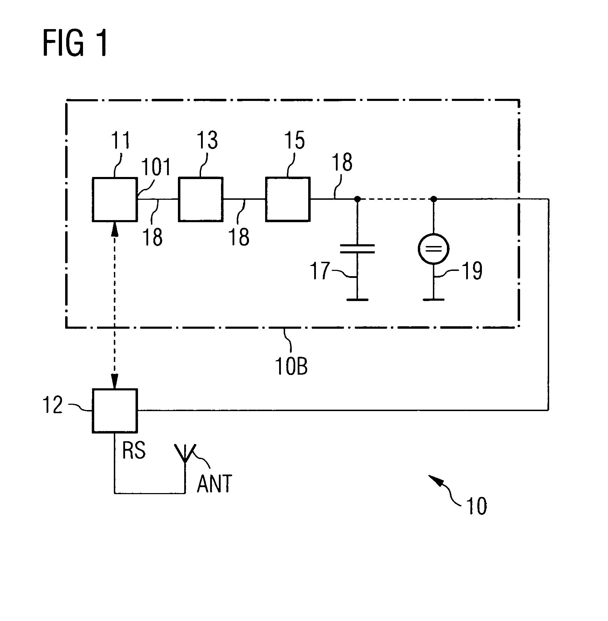

Figure 1 shows some parts of a device 10. The device 10 comprises a receiver 12 that is adapted to receive a signal RS from antenna ANT. The resonance frequency of the antenna ANT is preferably tunable so that the device 10 can select the channel for the receiver 12. It is also possible that instead of one antenna ANT more antennas are used, especially if suitable switching to select between the antennas is used. The receiver 12 may be adapted to receive a first and a second radio band, such as GSM 900 and GSM 1800 bands. Furthermore, the receiver 12 may be adapted to receive a third and a fourth radio band too, such as GSM 850 and GSM 1900 bands. Then the device 10 may tune the receiver 12 by selecting a band and channel to be received.

The device 10 comprises a processing part 10B which comprises a clock controlled circuit component 11, such as a microprocessor, microcontroller, or a Digital Signal Processors DSP. The power supply 19 may be adapted to power not only the clock controlled circuit component 11 but also the receiver 12.

According to one aspect of the invention, instead of or in addition to having an extensive shielding on the clock controlled circuit component 11, the high frequency components from the clock controlled circuit component 11 are eliminated already on its circuit path 18, such as current supply path. The circuit path 18 may be a strip line.

This can be effected by bringing at least one filter 13, 15 having a reject band separately to all current supply inputs of the clock controlled circuit component 11.

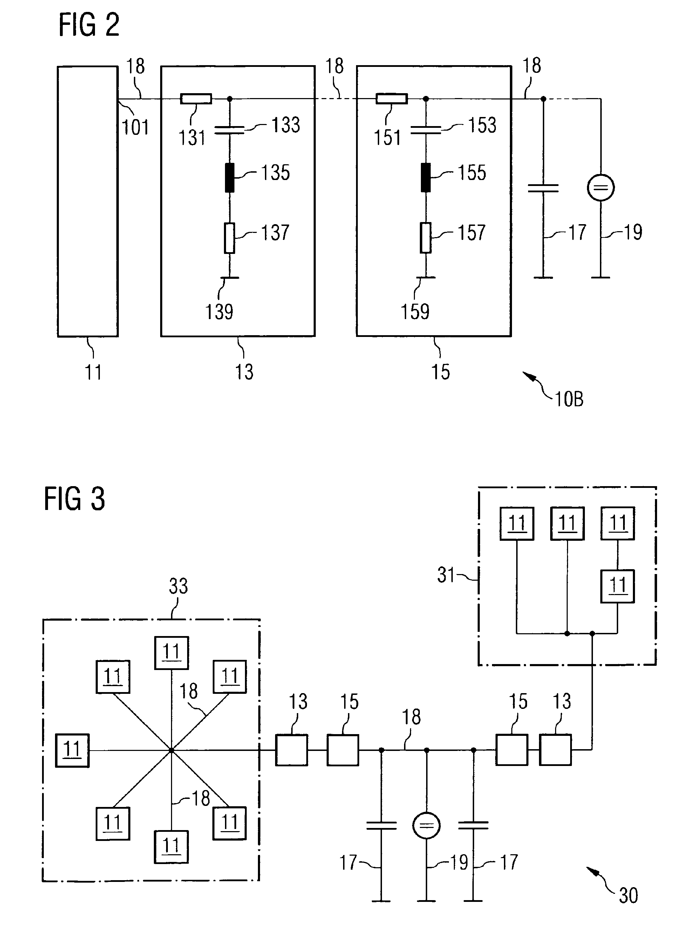

Figure 2 illustrates the structure of the processing part 10B in more detail. The first filter 15 comprises resistance 151, capacitance 153, inductance 155 and a further resistance 157 that has a grounded shortening point 159. The second filter 13 comprises likewise resistance 131, capacitance 133, inductance 135 and a further resistance 137 that has a grounded shortening point 139.

Figure 3 illustrates a possibility wherein a device 30 comprises a plurality (i.e. at least two) of clock controlled circuit components 11. The device 30 is for other aspects much similar to device 10 shown in Figure 1 but the number of clock controlled circuit components 11 and the manner in which they are grouped is different. All or a number of the clock operated circuit components 11 of the device 30 are interconnected into a tree structure 31 or into a star structure 33.

The filters 13, 15 are so designed that especially the frequencies used by the radio system, at least by the receiver 12 but preferably also by the transmitter (not shown in Figure 1 are suppressed up to a reasonable degree.

In the case of the device 10, 30 being a GSM mobile radio device operating on GSM bands this would mean that frequencies for GSM bands 850, 900, 1800 and 1900 MHz would be suppressed.

In contrast to Figure 2, wherein the first filter 15 and the second filter 13 each show one reject band, the filters 13, 15 having a reject band can be implemented to have more than one reject band. If the total number of reject bands is two, then one is preferably for the lower frequency band and one for the higher frequency band.

The reject band RB1 of the first filters 15 and the reject band RB2 of the second filter 13, may be so selected that predefined frequencies of the reject bands can be interconnected within each RB1 and RB2. In practice this can mean that the GSM 850 and 900 MHz bands can be covered by the reject band RB2 of the second filter 13 and the GSM 1800 and 1900 MHz by the reject band RB1 of the first filter 15.

The first filter 15 has a reject band RB1 located higher in frequency than the second filter 13. The first filter 15 is also closer to charge buffer so that from the circuit the highest frequencies falling under RB1 are filtered first, after which the lower frequencies falling under RB2 are filtered.

The inputs of the clock controlled circuit component or components 11, the printed circuit board with its available circuit paths 18 and through connections have an impact on the matching of the first and second filter 15, 13, since they act as distributed filters. Furthermore, the parasitic effects are preferably taken into account.

In other words, the bandwidth of the current supply 19 can be restricted on the source side for those clock controlled circuit components 11 that do not have any internal electrical charge accumulator.

The device 10, 30 may be a terminal capable for wireless communication, especially an accessory card enabling wireless communication for a computer. Particular examples of such devices are GSM or GPRS capable radio cards. The invention may nevertheless be applied to any other device in line with the scope of the patent claims.

## Claims

1. A device (10; 30), comprising:
- a radio receiver (12) comprising means for receiving radio signal on a first frequency band (GSM 1800);
- at least one clock controlled circuit component (11) having at least one input (101);
**characterized in that**: the device (10) further comprises between a charge accumulator (17) and the clock controlled circuit component (11) a first filter (15) having a reject band (RB1) overlapping with the first frequency band (GSM 1800).

2. A device (10; 30) according to claim 1, wherein: the radio receiver (12) further comprises means for receiving radio signal on a second frequency band (GSM 900); the device (10) further comprising: between a charge accumulator (17) and the clock controlled circuit component (11) a second filter (13) having a reject band (RB2) overlapping with the second frequency band (GSM 900).

3. A device (10; 30) according to claim 2, wherein: the reject band (RB1) of the first filter (15) is higher in frequency than the reject band (RB2) of the second filter (13), and the first filter (15) is placed closer to said charge accumulator (17) than said second filter (13).

4. A device (10; 30) according to claim 2, or 3, wherein: the reject band (RB2) of the second filter (13) extends to overlap with GSM 850 and 900 MHz frequency bands.

5. A device (10; 30) according to any one of the preceding claims, **wherein:** the reject band (RB1) of the first filter (15) extends to overlap with GSM 1800 and 1900 MHz frequency bands.

6. A device (30) according to any one of the preceding claims, wherein: a plurality of clock operated circuit components (11) each comprising at least one input (101) are arranged into a tree structure (31) or a star structure (33) in such a manner that the first filter (15) or the first filter (15) and the second filter (13) are located between the charge accumulator (17) and the tree structure (31) or the star structure (33).

7. A device (10; 30) according to claim 6, wherein: the first filter (15) or the first filter (15) and the second filter (13) are matched with at least one input (101) of at least two of the plurality of clock operated circuit components (11) and a corresponding circuit path (18).
